# EUROPÄISCHE PATENTSCHRIFT

(11) **EP 3 132 682 B1**
(45) Veröffentlichungstag und Bekanntmachung des Hinweises auf die Patenterteilung: **28.11.2018**
(21) Anmeldenummer: 16401047.2
(22) Anmeldetag: 09.08.2016
(51) Int. Cl.: A01M 7/00, A01M 9/00, A01B 69/00

(54) **REGEL- ODER STEUERSYSTEM, LANDWIRTSCHAFTLICHE MASCHINE MIT EINEM SOLCHEN SYSTEM UND VERFAHREN ZUM BETREIBEN EINER LANDWIRTSCHAFTLICHEN MASCHINE**
REGULATING OR CONTROL SYSTEM, AGRICULTURAL MACHINE WITH SUCH A SYSTEM AND METHOD FOR OPERATING AN AGRICULTURAL MACHINE
SYSTEME DE COMMANDE OU DE REGLAGE, MACHINE AGRICOLE COMPRENANT UN TEL SYSTEME ET PROCEDE DE FONCTIONNEMENT D'UNE MACHINE AGRICOLE

(30) Priorität: 19.08.2015 DE 102015113720
(43) Veröffentlichungstag der Anmeldung: 22.02.2017
(73) Patentinhaber: Amazonen-Werke H. Dreyer GmbH & Co. KG, 49205 Hasbergen (DE)
(72) Erfinder: ALBERT, Jörn, 49080 Osnabrück (DE); FRÖSCHLE, Heike, 49124 Georgsmarienhütte (DE); AUSTERMANN, Stefan, 48291 Telgte (DE); HEER, Jochen, 49074 Osnabrück (DE)

(56) Entgegenhaltungen:
- EP-A1- 2 253 187
- EP-A1- 2 936 980
- EP-A2- 2 522 207
- US-A1- 2012 296 529

## Beschreibung

Die Erfindung bezieht sich auf ein Regel- oder Steuersystem für eine landwirtschaftliche Maschine mit einem Verteilergestänge zum Ausbringen von Material, wie Düngemittel, Pflanzenschutzmittel oder Saatgut, mit wenigstens einem Sensor zur Ermittlung von Fahrdaten der Maschinen und/oder Fahrdaten eines Zugfahrzeugs der Maschinen und einer Datenverarbeitungseinheit zur Verarbeitung der Fahrdaten. Die Erfindung bezieht sich ferner auf eine landwirtschaftliche Maschine mit einem solchen System und ein Verfahren zum Betreiben einer landwirtschaftlichen Maschine.

Ein Regel- oder Steuersystem der eingangs genannten Art ist beispielsweise aus EP 2 522 207 A1 oder EP 2 936 980 A1 bekannt.

Als Feldspritzen ausgebildete landwirtschaftliche Maschinen weisen Verteilergestänge mit Arbeitsbreiten auf, die über 35 m erreichen können. Derartige Verteilergestänge sind großen Trägheitskräften ausgesetzt und daher entsprechend stabil gebaut. Bei unvorsichtigem Fahrverhalten kann es trotzdem zu Beschädigungen des Gestänges kommen.

EP 1 772 350 A1 beschreibt eine landwirtschaftliche Fahrzeugkombination aus Feldspritze und Zugfahrzeug. Die Fahrzeugkombination weist eine Steuerung auf, die in Abhängigkeit von der Geschwindigkeit den Deichselwinkel zwischen Zugfahrzeug und Feldspritze regelt, um zu verhindern, dass letztere bei zu hoher Geschwindigkeit bzw. zu kleinem Kurvenradius umkippt. Eine Weiterentwicklung dieser Steuerung ist in der eingangs genannten EP 2 522 207 A1 beschrieben, bei der der Lenkwinkel als Eingangsgröße zur Bestimmung einer maximal zulässigen Geschwindigkeit verwendet wird, um die Kippgefahr zu verringern.

EP 2 522 207 A1 enthält keine Information darüber, wie das Verteilergestänge vor Überbelastung bei hohen Beschleunigungen oder Verzögerungen geschützt werden kann. Darüber hinaus kann es zu ungedämpften Schwingungen des Verteilergestänges kommen, die zu einer ungleichmäßigen Verteilung des Düngemittels oder Pflanzenschutzmittels auf dem zu bearbeitenden Feld führen.

Der Erfindung liegt die Aufgabe zu Grunde, ein Regel- oder Steuersystem zu schaffen, das bei einem Verteilergestänge eine verbesserte Schwingungsdämpfung und einen verbesserten Überlastschutz ermöglicht. Der Erfindung liegt ferner die Aufgabe zu Grunde, eine landwirtschaftliche Maschine mit einem derartigen Regel- oder Steuersystem sowie ein Verfahren zum Betreiben einer landwirtschaftlichen Maschine anzugeben.

Erfindungsgemäß wird diese Aufgabe durch das Regel- oder Steuersystem mit den Merkmalen des Anspruchs 1 gelöst. Mit Blick auf die landschaftliche Maschine wird die Aufgabe durch den Gegenstand des Anspruchs 11 und mit Blick auf das Verfahren durch den Gegenstand Anspruchs 12 gelöst.

Die Erfindung beruht auf dem Gedanken, ein Regel- oder Steuersystem für eine landwirtschaftliche Maschine mit einem Verteilergestänge zum Ausbringen von Material, wie Düngemittel, Pflanzenschutzmittel oder Saatgut anzugeben. Das erfindungsgemäße Regel- oder Steuersystem weist wenigstens einen Sensor zur Ermittlung von Fahrdaten der Maschine und/oder Fahrdaten eines Zugfahrzeugs der Maschine sowie eine Datenverarbeitungseinheit zur Verarbeitung der Fahrdaten auf. Die Datenverarbeitungseinheit berechnet aus aktuellen, vom Sensor übermittelten Fahrdaten die zukünftige Beschleunigung des Verteilergestänges und/oder eine zukünftige auf das Verteilergestänge wirkende Beschleunigungskraft. Davon abhängig erzeugt die Datenverarbeitungseinheit ein Signal zur Regelung oder Steuerung des Verteilergestänges und/oder der Maschine und/oder des Zugfahrzeugs.

Die Erfindung hat gegenüber herkömmlichen Regelungen den Vorteil, dass die Regelung oder Steuerung nicht auf der Basis der aktuellen Fahrdaten erfolgt, was aufgrund der Trägheit des Verteilergestänges nicht die gewünschte Wirkung hervorrufen würde, da dann die Gefahr besteht, dass der eingestellte Grenz- bzw. Sollwert überschritten und nicht rechtzeitig reagiert werden kann.

Die Erfindung verwendet vielmehr eine vorausschauende oder perspektivische Regelung oder Steuerung, die zukünftige Fahrdaten, konkret die Beschleunigung und/oder Beschleunigungskraft, prognostiziert. Die ausgehend von den aktuellen Fahrdaten zu erwartende, zukünftige Beschleunigung und/oder Beschleunigungskraft des Verteilergestänges gehen in die Regelung oder Steuerung ein. Dadurch können frühzeitig Gegenmaßnahmen oder ein Eingriff in die Fahrsituation eingeleitet werden, um der langsamen Reaktionszeit des Verteilergestänges Rechnung zu tragen und dieses wirksam vor Beschädigungen zu schützen bzw. die Laufruhe des Verteilergestänges signifikant zu verbessern. Da im Rahmen der Erfindung die auf das Verteilergestänge wirkende zukünftige Beschleunigungskraft bzw. zukünftige Beschleunigung des Verteilergestänges als Eingangsgröße verwendet werden, ist die Regelung bzw. Steuerung schnell, präzise und sicher.

Unter Beschleunigung wird allgemein eine positive oder negative Beschleunigung, d.h. Verzögerung, verstanden.

Dabei ist es besonders vorteilhaft, wenn die Maschine über eine Aktorik verfügt, die eine aktive Regelung oder Steuerung des Verteilergestänges ermöglicht. Dies ist aber nicht zwingend. Andere einfache Gegenmaßnahmen zum Schutz des Verteilergestänges, wie eine Begrenzung der Fahrgeschwindigkeit oder der Beschleunigung des Zugfahrzeuges bzw. der Maschine sind möglich.

Zwar beschreibt EP 2 253 187 A1, dass ausgehend von aktuellen Fahrdaten zukünftige Fahrdaten berechnet werden, die in die Regelung einer Feldspritze einfließen. Allerdings handelt es sich bei den zukünftigen Fahrdaten nicht um die zukünftige Beschleunigung oder Beschleunigungskraft des Verteilergestänges, sondern um in die zukünftige Fahrzeuggeschwindigkeit über dem Boden, die ausgehend von der aktuellen Fahrzeuggeschwindigkeit und der Motordrehzahl berechnet wird. Die zukünftige Fahrzeuggeschwindigkeit geht auch nicht in die Regelung oder Steuerung des Verteilergestänges ein, sondern wird zur Regelung der Dosierung der Abgabemenge der bekannten Feldspritze verwendet. Dasselbe gilt für EP 2 870 850 A1, die ein Anzeige-und/oder Steuersystem für das An-und Abschalten eines Dosierungsorgans offenbart.

Die auf die Anmelderin zurückgehende, nachveröffentlichte DE 10 2014 101 866 beschreibt die Berechnung einer mechanischen Belastung des Verteilergestänges aus direkten Messgrößen, wie GPS-Koordinaten, Geschwindigkeit oder Lenkwinkel. Dabei handelt es sich um die Berechnung der aktuellen Belastung und nicht um die Berechnung einer zu erwartende zukünftigen Beschleunigung bzw. Beschleunigungskraft aus aktuellen Messdaten.

Bevorzugte Ausführungsformen der Erfindung sind Gegenstand der Unteransprüche.

So kann die Datenverarbeitungseinheit aus der gemessenen, aktuellen Drehgeschwindigkeit und/oder Drehbeschleunigung des Zugfahrzeugs bei Kurvenfahrt und vor Beginn der Kurvenfahrt der gezogenen Maschine die zukünftige Drehgeschwindigkeit und/oder Drehbeschleunigung der Maschine jeweils bei der Kurvenfahrt berechnen. Die Vorausberechnung der Drehbeschleunigung der Maschine und des an der Maschine angebrachten Verteilergestänges ist wegen der Totzeit möglich, die zwischen dem Einfahren des Zugfahrzeugs in die Kurve, beispielsweise das Vorgewende, und dem Beginn der Kurvenfahrt der nachlaufenden Maschine liegt. Die Totzeit ergibt sich aus dem Abstand zwischen Zugfahrzeug und Maschine. Gleiches gilt für die Totzeit, die sich bei einer selbstfahrenden Maschine aus dem Achsabstand zwischen den gelenkten Rädern und den Hinterrädern ergibt, in deren Bereich üblicherweise das Verteilergestänge angeordnet ist. Die Totzeit bildet ein ausreichend großes Zeitfenster, um Gegenmaßnahmen zum Schutz des Gestänges oder zur Schwingungsdämpfung einzuleiten.

Erfindungsgemäß berechnet die Datenverarbeitungseinheit aus der aktuellen Drehgeschwindigkeit und/oder Drehbeschleunigung des Zugfahrzeugs bei Kurvenfahrt und aus dem Lenkwinkel des Zugfahrzeugs und/oder dem Knickwinkel zwischen Zugfahrzeug und Maschine die zukünftige Drehgeschwindigkeit und/oder Drehbeschleunigung der Maschine jeweils bei Kurvenfahrt. Der Knickwinkel bzw. Deichselwinkel lässt sich in an sich bekannter Weise messen und ermöglicht zusammen mit der gemessenen aktuellen Drehgeschwindigkeit bzw. Drehbeschleunigung des Zugfahrzeugs die Berechnung der zukünftigen Drehgeschwindigkeit bzw. zukünftigen Drehbeschleunigung der Maschine und damit des an der Maschine befestigten Verteilergestänges.

Eine weitere Möglichkeit der Vorausberechnung der Fahrsituation besteht darin, dass die Datenverarbeitungseinheit aus gespeicherten Informationen von Fahrspuren der Maschine und der aktuellen Position und Fahrgeschwindigkeit der Maschine die zukünftige Drehgeschwindigkeit und/oder Drehbeschleunigung der Maschine jeweils bei Kurvenfahrt und/oder zukünftige lineare Verzögerungen oder Beschleunigungen der Maschine berechnet. Diese Ausführungsform ist besonders für automatische Lenksysteme geeignet, die auf der Basis gespeicherter Fahrspuren ein Feld bearbeiten. Auf diese Weise ist es möglich, durch den Abgleich geplanter Fahrspuren mit der aktuellen Position und Geschwindigkeit des Fahrzeugs Rückschlüsse auf die zukünftige Fahrsituation der Maschine und des mit der Maschine verbundenen Verteilergestänges zu schließen. Somit kann bereits im Vorfeld eine anstehende Drehgeschwindigkeit und/oder Drehbeschleunigung sowie anstehende lineare Beschleunigungen oder Verzögerungen vorbestimmt werden.

Vorzugsweise berechnet die Datenverarbeitungseinheit aus gespeicherten Informationen von Feldgrenzen und Geometrie der Maschine und/oder des Zugfahrzeugs einerseits und der aktuellen Position und Fahrgeschwindigkeit der Maschine bzw. des Zugfahrzeugs andererseits die zukünftige Drehgeschwindigkeit und/oder Drehbeschleunigung der Maschine jeweils bei Kurvenfahrt und/oder die zukünftige lineare Fahrbeschleunigung der Maschine. Diese Ausführungsform hat den Vorteil, dass es dafür im Gegensatz zu der vorstehend genannten Ausführungsform nicht erforderlich ist, dass alle Fahrspuren im vorbekannt sind.

Weiter vorzugsweise kann die Datenverarbeitungseinheit aus der Sollgeschwindigkeit des Zugfahrzeugs oder der selbstfahrenden Maschine eine zukünftige Fahrgeschwindigkeit und/oder Fahrbeschleunigung der Maschine berechnen. Die Bestimmung der Sollgeschwindigkeit kann beispielsweise durch die Position eines Fahrhebels oder Gaspedals oder durch die Einstellung eines Tempomats bestimmt werden. Alternativ kann die Sollgeschwindigkeit des Zugfahrzeugs als Information über eine genormte Schnittstelle bspw. ISOBUS an die gezogene Maschine gesendet werden.

Das in Abhängigkeit von der zukünftigen Beschleunigung des Verteilergestänges und/oder der zukünftigen auf das Verteilergestänge wirkenden Beschleunigungskraft erzeugte Signal kann ein Warnsignal oder eine automatische Begrenzung der Fahrgeschwindigkeit bewirken. Das Warnsignal richtet sich an den Fahrer, der dann manuell die Fahrgeschwindigkeit verringert oder begrenzt. Bei einem automatischen Lenksystem kann, ebenso wie bei einem manuell gesteuerten Fahrzeug, eine automatische Begrenzung der Fahrgeschwindigkeit erfolgen. Durch die Begrenzung der Fahrgeschwindigkeit wird verhindert, dass die sich infolge der perspektivischen Berechnung der Belastungssituation oder der Beschleunigung am Verteilergestänge ergebenden kritischen Grenzwerte überschritten werden. Damit wird das Verteilergestänge wirksam vor Überbelastung geschützt.

Eine GPS-Einrichtung kann den Abstand zwischen der aktuellen Position der Maschine und dem Beginn der Kurvenfahrt, bspw. des Vorgewendes, oder einer anderen gespeicherten Position, an der eine Geschwindigkeitsänderung erfolgt, erfassen. Das Signal bewirkt vor Beginn der Kurvenfahrt oder vor der gespeicherten Position in Abhängigkeit vom Abstand eine kontinuierliche Verringerung der Fahrgeschwindigkeit. Damit wird einerseits verhindert, dass ein kritischer Grenzwert, der zu einer Überbelastung des Verteilergestänges führen würde, überschritten wird. Zum anderen wird die Verringerung der Fahrgeschwindigkeit aufgrund der Abstandsmessung so frühzeitig eingeleitet, dass eine gleichmäßige und kontinuierliche Führung des Verteilergestänges möglich ist. Dies wirkt sich positiv auf die homogene Verteilung des Düngemittels bzw. des Pflanzenschutzmittels aus, da durch die kontinuierliche Verringerung der Fahrgeschwindigkeit Schwingungen im Verteilergestänge vermieden wird.

Bei besonders bevorzugten Ausführungsform löst das in Abhängigkeit von der zukünftigen Beschleunigung des Verteilergestänges und/oder der zukünftigen auf das Verteilergestänge wirkenden Beschleunigungskraft erzeugte Signal vor der tatsächlichen Beschleunigung des Verteilergestänges, insbesondere vor Beginn einer Kurvenfahrt, eine Vorbeschleunigung des Verteilergestänges aus. Dasselbe gilt für eine anstehende lineare Beschleunigung bzw. Verzögerung.

Die Vorbeschleunigung des Verteilergestänges in Richtung der späteren tatsächlichen Beschleunigung bewirkt, dass die maximale Beschleunigung verringert wird, weil die Gesamtbeschleunigung über einen längeren Zeitraum erfolgt, als dies der Fall ist, wenn das Verteilergestänge ohne Vorbeschleunigung beschleunigt wird. Bei einer Kurvenfahrt verringert sich insgesamt die Drehbeschleunigung entsprechend. Dasselbe gilt bei einer linearen Beschleunigung.

Vorzugsweise ist die Vorbeschleunigung derart eingestellt, dass sich eine gleichförmige Bewegung des Verteilergestänges, insbesondere eine gleichförmige Kreisbewegung des Verteilergestänges, während der Kurvenfahrt ergibt. Damit wird die Laufruhe des Verteilergestänges und somit die homogene Ausbringung von Material verbessert.

Die Erfindung betrifft ferner eine landwirtschaftliche Maschine zum Ausbringen von Material, wie Düngemittel, Pflanzenschutzmittel oder Saatgut, mit einem Vorratsbehälter, der mit einem Abgabeorgan für das Material verbunden oder verbindbar ist, einem Verteilergestänge und einem erfindungsgemäßen Regel- oder Steuersystem. Die Erfindung betrifft ferner ein Verfahren zum Betreiben einer landwirtschaftlichen Maschine, wobei Material, wie Düngemittel, Pflanzenschutzmittel oder Saatgut, aus einem Vorratsbehälter durch ein Abgabeorgan ausgebracht wird und aktuelle Fahrdaten der Maschine und/oder eines Zugfahrzeugs der Maschine erfasst werden. Aus den aktuellen Fahrdaten wird eine zukünftige Beschleunigung des Verteilergestänges und/oder eine zukünftige auf das Verteilergestänge wirkende Beschleunigungskraft berechnet. Davon abhängig wird ein Signal zur Regelung oder Steuerung erzeugt.
Auf die im Zusammenhang mit dem System erläuterten Vorteile der vorausschauenden Regelung bzw. Steuerung zur Vermeidung von Überbelastung bzw. zur Verbesserung der Laufruhe des Verteilergestänges wird Bezug genommen.

Die Maschine ist vorzugsweise als Feldspritze ausgebildet. Die Erfindung ist auf andere Maschinentypen anwendbar, beispielsweise auf selbstfahrende Maschinen, konkret selbstfahrende Feldspritzen. Es ist auch möglich, dass es sich bei der Maschine um eine getragene Maschine handelt, bei der das Verteilergestänge direkt mit dem Zugfahrzeug verbunden ist. Diesen Ausführungsformen ist gemeinsam, dass das Verteilergestänge am in Fahrtrichtung hinteren Ende des Grundgerätes, d.h. der Maschine (selbstfahrend oder gezogen) bzw. des Zugfahrzeugs angeordnet ist. Bei einer Kurvenfahrt bildet das Verteilergestänge ein Anbauteil, das bezogen auf das Grundgerät zeitlich gesehen als letztes Bauteil die Kurvenfahrt beginnt.

Die Fahrzeugkombination bzw. die vorstehend genannten weiteren Ausführungen (selbstfahrende/getragene Maschine) weist ein Regel- oder Steuersystem auf, das beispielsweise in dem Bordcomputer des Zugfahrzeugs oder anderweitig in einem Jobrechner integriert ist. Das Regel- oder Steuersystem weist wenigstens einen Sensor auf, mit dessen Hilfe die Fahrdaten der Maschine und/oder die Fahrdaten des Zugfahrzeugs der Maschine ermittelt werden. Bei dem Sensor kann es sich um einen oder mehrere der folgenden Sensoren handeln:
Einen Beschleunigungssensor, einen Drehratensensor, einen Lenkwinkelsensor, einen Geschwindigkeitssensor, einen Positionssensor (zur Übermittlung von GPS-Daten). Generell handelt es sich bei dem Sensor um einen Sensor, der dazu geeignet ist, Fahrdaten der Maschine und/oder Fahrdaten des Zugfahrzeugs der Maschine zu ermitteln, aus denen dann eine zukünftige Beschleunigung des Verteilergestänges und/oder eine zukünftige auf das Verteilergestänge wirkende Beschleunigungskraft berechnet werden kann. Der Sensor kann mit weiteren Sensoren kombiniert werden, die einen oder mehrere der folgenden Sensoren umfassen: Einen Wegsensor, weitere Beschleunigungssensoren, einen Dehnungssensor, einen Drehmomentsensor, weitere Drehratensensoren, einen Drucksensor, einen Füllstandsensor, weitere Geschwindigkeitssensoren, einen Kraftsensor, einen Lagesensor, Winkelsensoren und weitere Lenkwinkelsensoren.

Den vorstehend genannten Sensoren können neben mechanischen Prinzipien auch optische, elektrische, magnetische, optoelektronische und/oder piezoelektronische Prinzipien zu Grunde liegen. Der Dehnungssensor kann in Form eines beispielsweise auf mechanische oder optische Weise funktionierenden Dehnungsmessstreifens ausgebildet sein und dient beispielsweise zum Messen von Verformungen am Gestänge. Er kann auch nach einem piezoelektrischen, magnetoelastischen und/oder dem optischen Prinzip funktionieren und/oder als Kraftsensor ausgestaltet sein. Der Kraftsensor kann zum Beispiel mittels Verformung eines Federkörpers eine Kraft messen. Der Lage- oder Positionssensor kann zum Messen einer Position ausgebildet sein, beispielsweise mittels GPS-Koordinaten. Alternativ oder zusätzlich kann der Lagesensor ein Magnetometer umfassen. Der Winkelsensor kann in Form eines Neigungsmessers, beispielsweise bezogen auf die Schwerkraft, ausgebildet sein. Ein Drucksensor kann in der Hydraulik eines Dämpfungselements und/oder eines Stellelements angeordnet sein. Ein Wegsensor kann an Federelementen des Verteilergestänges vorgesehen sein. Ein Lenkwinkelsensor und/oder Drehratensensor kann an einer als Deichsel ausgebildeten Kupplungsstange zwischen dem Zugfahrzeug und der Maschine oder an einem der Räder des Zugfahrzeugs und/oder der Maschine angeordnet sein. Ein Drehratensensor kann ebenfalls an jeder beliebigen Position der Maschine oder des Zugfahrzeuges angebracht sein, um die Drehgeschwindigkeit zu bestimmen und hieraus Rückschlüsse über derzeitige und/oder zukünftige Beschleunigungsvorgänge des Gestänges und/oder Beschleunigungskräfte, welche auf das Gestänge wirken und/oder wirken werden, zu bestimmen. Zudem ist es denkbar Beschleunigungsvorgänge direkt mit Beschleunigungsaufnehmern, beispielsweise piezoelektrischen Beschleunigungsmessern, zu bestimmen. Diese können sowohl an dem Zugfahrzeug, als auch an der Maschine zur direkten Bestimmung der Gierbeschleunigung verbaut oder auch am Gestänge angebracht sein. Wenn die Maschine selbstfahrend ist, kann der Lenkwinkelsensor an einem der gelenkten Räder zur Messung des Lenkwinkelausschlages angeordnet sein. Der Drehratensensor kann ein Sensor zum Messen der Ausgangsdrehzahl des Motorgetriebes sein, der indirekt auch die Fahrzeuggeschwindigkeit misst. Auch ist es denkbar die Motordrehzahl des Zugfahrzeuges oder der selbstfahrenden Maschine zu messen und hieraus Rückschlüsse über Beschleunigungs- und/oder Verzögerungsvorgänge zu erhalten.

Das Regel- oder Steuersystem umfasst ferner eine Datenverarbeitungseinheit zur Verarbeitung der Fahrdaten und zur Berechnung der zukünftigen Beschleunigung des Verteilergestänges und/oder der zukünftigen auf das Verteilergestänge wirkenden Beschleunigungskraft aus den aktuellen, vom Sensor übermittelten Fahrdaten. Der Sensor kann mit der Datenverarbeitungseinrichtung drahtlos oder drahtgebunden verbunden sein. Die Datenverarbeitungseinrichtung umfasst in an sich bekannter Weise eine Auswerteeinrichtung für die vom Sensor übermittelten Fahrdaten sowie eine Speichereinheit zur Speicherung der übermittelten und berechneten Daten.

In Abhängigkeit von der berechneten zukünftigen Beschleunigung des Verteilergestänges und/oder der zukünftigen auf das Verteilergestänge wirkenden Beschleunigungskraft gibt die Datenverarbeitungseinheit ein Signal zur Regelung oder Steuerung aus.

Nachfolgend wird die Funktionsweise des Regel- oder Steuersystems anhand eines in den Figuren dargestellten schematischen Beispiels, bei dem die Fahrsituation vorausberechnet wird, erläutert.

In diesen zeigen:
- Fig. 1: eine Fahrzeugkombination in Geradausfahrt;
- Fig. 2: die Fahrzeugkombination gemäß Fig.1, bei der nur das Zugfahrzeug eine Kurve fährt und
- Fig. 3: die Fahrzeugkombination gemäß Fig.1, bei der das Zugfahrzeug und die Maschine die Kurve fahren.

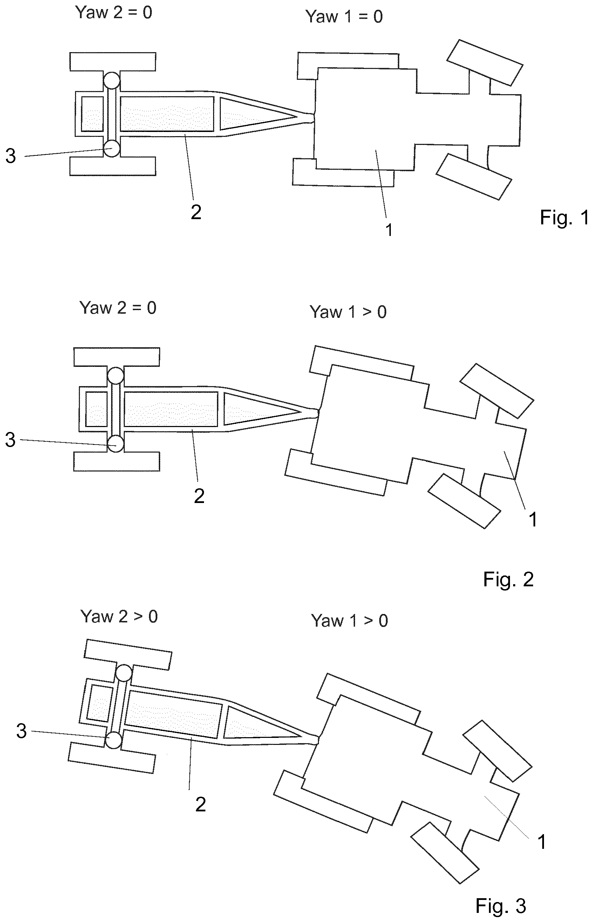

Wie in Figur 1 dargestellt, ist die Ausgangssituation eine lineare Fahrbewegung ohne Gierbewegung um die Hochachse (Yaw 2=0 und Yaw 1=0). In Figur 2 ändert sich die Fahrsituation. Dabei tritt das Zugfahrzeug 1 in die Kurvenfahrt ein (Yaw 1>0) und die gezogene Maschine befindet sich noch in der linearen Fahrbewegung vor Beginn der Kurve (Yaw 2=0). Damit unterliegt bei der dargestellten Fahrzeugkombination das Zugfahrzeug 1 zuerst einer Drehgeschwindigkeit bzw. Drehbeschleunigung, bevor zwischen dem Zugfahrzeug und der gezogenen Maschine ein Winkel entsteht, welcher die Drehgeschwindigkeit bzw. Drehbeschleunigung der gezogenen Maschine verursacht. Die Drehgeschwindigkeit und/oder Drehbeschleunigung des Zugfahrzeugs wird mit dem Sensor des Regel- oder Steuersystems gemessen. Aus den daraus gewonnenen Fahrdaten kann die zukünftige Drehgeschwindigkeit und/oder Drehbeschleunigung der gezogenen Maschine berechnet werden. Daraus kann dann wiederum die zukünftige Drehbeschleunigung des Verteilergestänges an der Maschine bzw. die auf das Verteilergestänge wirkenden, zukünftigen Drehbeschleunigungskräfte berechnet werden, die dann zeitlich verzögert tatsächlich auftreten (Fig. 3, Yaw 2>0 und Yaw 1>0), wenn keine Regelung/Steuerung vorher erfolgte.

Nach demselben Prinzip, wie in den Figuren 1 und 2 dargestellt, kann die zukünftige Drehgeschwindigkeit und/oder Drehbeschleunigung der Maschine anhand des Lenkwinkels des Zugfahrzeugs 1 berechnet werden. Wenn der aktuelle Lenkwinkel des Zugfahrzeugs bekannt ist, kann zusammen mit der aktuellen Geschwindigkeit der gezogenen Maschine die zukünftige Drehgeschwindigkeit und/oder Drehbeschleunigung der gezogenen Maschine berechnet werden. Die Ermittlung des Lenkwinkels des Zugfahrzeugs kann beispielsweise direkt durch eine Winkelmessung oder indirekt dadurch ermittelt werden, dass der Sensor am Zugfahrzeug die Information über den Lenkwinkel an die gezogenen Maschine sendet, beispielsweise über eine genormte Schnittstelle, wie den ISOBUS. Das in Fig. 1 und 2 und das vorstehend genannte alternative Berechnungskonzept sind nicht nur auf die gezeigte Fahrzeugkombination, sondern auch auf selbstfahrende bzw. getragene Maschinen anwendbar.

Es ist auch möglich, die vorstehend genannten aktuellen Daten, d.h. Drehgeschwindigkeit/Drehbeschleunigung des Zugfahrzeugs und Lenkwinkel des Zugfahrzeugs, miteinander zu kombinieren, um die Drehgeschwindigkeit/ Drehbeschleunigung der gezogenen Maschine bzw. des Verteilergestänges zu berechnen.

Für die Vorausberechnung der Fahrsituation sind weitere Konzepte möglich. Diese sind in der Beschreibungseinleitung erläutert und entsprechend beansprucht. Die vorstehend genannten Konzepte können auf die in den Figuren gezeigte Fahrzeugkombination, auf selbstfahrende Maschinen oder auf getragene Maschinen angewendet werden.

Das Signal, das in Abhängigkeit von der zukünftigen Beschleunigung des Verteilergestänges und/oder der zukünftigen auf das Verteilergestänge wirkenden Beschleunigungskraft zur Regelung oder Steuerung erzeugt wird, kann auf verschiedene Weise genutzt werden.

Im einfachsten Fall bewirkt das erzeugte Signal ein Warnsignal, das dem Anwender den Hinweis gibt, dass er zu schnell fährt und möglicherweise das Verteilergestänge schädigt. In Abhängigkeit von der berechneten zukünftigen Fahrsituation, bezogen auf das Verteilergestänge, kann der Fahrer einen Hinweis auf die maximale unkritische Geschwindigkeit erhalten, beispielsweise wenn ein bestimmter Lenkwinkel beibehalten wird. Zusätzlich kann ein Eintrag in einem Fehlerspeicher gesetzt werden.

In einer Weiterentwicklung kann automatisch die Fahrgeschwindigkeit begrenzt werden, beispielsweise bei einer selbstfahrenden Maschine über den Fahrantrieb oder bei einer gezogenen oder getragenen bzw. angebauten Maschine bzw. Feldspritze über das sogenannte Tractor Implement Management (TIM), das Teil der ISOBUS-Norm ist. Die Fahrgeschwindigkeit wird dann auf einen unkritischen Wert begrenzt, und zwar jeweils in Abhängigkeit von der prognostizierten Fahrsituation.

In einer weiteren Ausbildung kann durch ein GPS-System die Position des Verteilergestänges detektiert werden. In Abhängigkeit von der Position kann berechnet werden, wann die Maschine eine Kurvenfahrt beginnt, beispielsweise, wann die Maschine in das Vorgewende abbiegen wird. Daraufhin wird die Fahrgeschwindigkeit bereits frühzeitig langsam und sanft auf einen unkritischen Wert reduziert. Die Positionsbestimmung durch eine GPS-Einrichtung bzw. ein GPS-System kann generell auf gespeicherte Positionen angewendet werden und ist nicht auf Kurvenfahrten beschränkt. Vielmehr ist es auch möglich, lineare Beschleunigungen oder Verzögerungen vorauszusehen und frühzeitig Gegenmaßnahmen einzuleiten, wenn entsprechende lokale Positionen gespeichert sind, die eine Geschwindigkeitsänderung erfordern. Dies gilt für alle Ausführungsformen und Ausführungsbeispiele dieser Anmeldung.

Alternativ oder zusätzlich zu der vorstehenden Regelung bzw. Steuerung des Zugfahrzeugs 1 bzw. der Maschine 2 kann das Signal dazu verwendet werden, das Verteilergestänge aktiv zu regeln bzw. zu steuern. Dazu ist es möglich, das Verteilergestänge vor Beginn der tatsächlichen Beschleunigung des Verteilergestänges, beispielsweise vor Beginn der Kurvenfahrt, vorzubeschleunigen, insbesondere in Richtung der Beschleunigung. Bei einer Kurvenfahrt kann dies eine Drehbeschleunigung sein. Bei einer linearen Beschleunigung bzw. Verzögerung kann dies eine lineare Beschleunigung des Verteilergestänges in Richtung der positiven oder negativen Beschleunigung sein.

Dazu ist das Verteilergestänge entsprechend beweglich aufgehängt, beispielsweise durch eine Parallelogrammaufhängung, die eine translatorische Bewegung in oder entgegen der Fahrtrichtung ermöglicht. Der Antrieb des Verteilergestänges erfolgt durch geeignete Aktoren, beispielsweise Hydraulikzylinder, die das Verteilergestänge in Richtung des zukünftigen Beschleunigungsvektors bewegen. Entsprechendes gilt für die Drehbewegung des Verteilergestänges um die Hochachse, die ebenfalls durch eine entsprechende Aufhängung des Verteilergestänges, verbunden mit einer geeigneten Aktorik bewirkt wird.

Mit dieser Ausgestaltung im Zusammenhang mit der Regelung bzw. Steuerung auf der Basis der perspektivischen Fahrsituation wird durch die Vorbeschleunigung des Gestänges um die Hochachse bzw. in oder entgegen der Fahrtrichtung die zur Verfügung stehende Zeit zur Beschleunigung des Verteilergestänges erhöht. Damit werden die auf das Verteilergestänge wirkenden Beschleunigungskräfte verringert. Dies gilt sowohl für eine positive Drehbeschleunigung, beispielsweise bei Kurveneinfahrt, sowie eine negative Drehbeschleunigung, beispielsweise bei Kurvenausfahrt. Ein weiterer Vorteil dieser Ausgestaltung besteht darin, dass eine gleichförmige Kreisbewegung des Verteilergestänges während der Kurvenfahrt erreicht wird, so dass die maximale Drehbeschleunigung und/oder Drehgeschwindigkeit des Verteilergestänges verringert wird.

Die Änderung der Geschwindigkeit, insbesondere der Drehgeschwindigkeit der Maschine und damit des Verteilergestänges vor deren tatsächlichem Eintreten kann beispielsweise wie folgt realisiert werden. Ein Drehratensensor kann auf dem Zugfahrzeug der gezogenen Maschine vorgesehen sein. Damit kann die Drehrate/Drehbeschleunigung des Zugfahrzeuges gemessen werden, bevor die Maschine und damit das Verteilergestänge durch die Kurvenfahrt mit dem entsprechenden Kurvenradius eine Drehbeschleunigung bzw. Drehrate erfährt. Weiterhin ist eine GPS-Positionserfassung des Fahrzeugs und der Abgleich mit geplanten Fahrspuren möglich. Die GPS-Positionserfassung des Fahrzeuges kann auch mit der vorhandenen Feldkontur und eingestellten Arbeitsparametern, wie der Arbeitsbreite usw. abgeglichen werden. Die Auswertung von Lenkwinkelinformationen des Zug- oder Trägerfahrzeugs durch eine direkte Signalübertragung oder eine indirekte Signalübertragung, beispielsweise über die ISOBUS-Schnittstelle des Zugfahrzeuges, ist möglich.

Die vorstehend genannten Verfahren können jeweils für sich oder in Kombination miteinander verwendet werden.

## Patentansprüche

1. Regel- oder Steuersystem für eine landwirtschaftliche Maschine (2) mit einem Verteilergestänge zum Ausbringen von Material, wie Düngemittel, Pflanzenschutzmittel oder Saatgut, mit wenigstens einem Sensor zur Ermittlung von Fahrdaten der Maschine (2) und/oder Fahrdaten eines Zugfahrzeugs (1) der Maschine (2) und einer Datenverarbeitungseinheit zur Verarbeitung der Fahrdaten, **wobei** die Datenverarbeitungseinheit aus aktuellen, vom Sensor übermittelten Fahrdaten eine zukünftige Beschleunigung des Verteilergestänges und/oder eine zukünftige auf das Verteilergestänge wirkende Beschleunigungskraft berechnet und davon abhängig ein Signal zur Regelung oder Steuerung erzeugt, **dadurch gekennzeichnet, dass**
die Datenverarbeitungseinheit derart konfiguriert ist, dass aus der aktuellen Drehgeschwindigkeit und/oder Drehbeschleunigung des Zugfahrzeugs bei Kurvenfahrt und dem Lenkwinkel des Zugfahrzeugs und/oder dem Knickwinkel zwischen dem Zugfahrzeug und der Maschine die zukünftige Drehgeschwindigkeit und/oder Drehbeschleunigung der Maschine (2) jeweils bei Kurvenfahrt berechnet wird.

2. System nach Anspruch 1, **dadurch gekennzeichnet, dass** die Datenverarbeitungseinheit aus der aktuellen Drehgeschwindigkeit und/oder Drehbeschleunigung des Zugfahrzeugs (1) bei Kurvenfahrt und vor Beginn der Kurvenfahrt der gezogenen Maschine (2) die zukünftige Drehgeschwindigkeit und/oder Drehbeschleunigung der Maschine (2) jeweils bei Kurvenfahrt berechnet.

3. System nach einem der vorhergehenden Ansprüche, **dadurch gekennzeichnet, dass** die Datenverarbeitungseinheit aus gespeicherten Informationen von Fahrspuren der Maschine (2) und der aktuellen Position und Fahrgeschwindigkeit der Maschine (2) die zukünftige Drehgeschwindigkeit und/oder Drehbeschleunigung der Maschine jeweils bei Kurvenfahrt und/oder zukünftige lineare Fahrbeschleunigungen der Maschine (2) berechnet.

4. System nach einem der vorhergehenden Ansprüche, **dadurch gekennzeichnet, dass** die Datenverarbeitungseinheit aus gespeicherten Informationen von Feldgrenzen und Geometrie der Maschine (2) und/oder des Zugfahrzeugs (1) und der aktuellen Position und Fahrgeschwindigkeit der Maschine (2) die zukünftige Drehgeschwindigkeit und/oder Drehbeschleunigung der Maschine (2) jeweils bei Kurvenfahrt und/oder die zukünftige lineare Fahrbeschleunigung der Maschine (2) berechnet.

5. System nach einem der vorhergehenden Ansprüche, **dadurch gekennzeichnet, dass** die Datenverarbeitungseinheit aus der Sollgeschwindigkeit des Zugfahrzeugs (1) oder der selbstfahrenden Maschine (2) eine zukünftige Fahrgeschwindigkeit und/oder Fahrbeschleunigung der Maschine (2) berechnet.

6. System nach einem der vorhergehenden Ansprüche, **dadurch gekennzeichnet, dass** das in Abhängigkeit von der zukünftigen Beschleunigung des Verteilergestänges und/oder der zukünftigen auf das Verteilergestänge wirkende Beschleunigungskraft erzeugte Signal ein Warnsignal und/oder eine automatische Begrenzung der Fahrgeschwindigkeit bewirkt.

7. System nach einem der vorhergehenden Ansprüche, **dadurch gekennzeichnet, dass** eine GPS-Einrichtung den Abstand zwischen der aktuellen Position Maschine (2) und einer gespeicherten Position, insbesondere dem Beginn der Kurvenfahrt, erfasst und das Signal vor der gespeicherten Position in Abhängigkeit vom Abstand eine kontinuierliche Verringerung der Fahrgeschwindigkeit bewirkt.

8. System nach einem der vorhergehenden Ansprüche, **dadurch gekennzeichnet, dass** das in Abhängigkeit von der zukünftigen Beschleunigung des Verteilergestänges und/oder der zukünftigen auf das Verteilergestänge wirkende Beschleunigungskraft erzeugte Signal vor der tatsächlichen Beschleunigung des Verteilergestänges, insbesondere vor Beginn einer Kurvenfahrt, eine Vorbeschleunigung des Verteilergestänges auslöst.

9. System nach Anspruch 8, **dadurch gekennzeichnet, dass** die Vorbeschleunigung derart eingestellt ist, dass sich eine gleichförmige Bewegung, insbesondere eine gleichförmige Kreisbewegung des Verteilergestänges während der Kurvenfahrt ergibt.

10. Landwirtschaftlich Maschine zum Ausbringen von Material, wie Düngemittel, Pflanzenschutzmittel oder Saatgut, mit einem Vorratsbehälter, der mit einem Abgabeorgan für das Material verbunden oder verbindbar ist, einem Verteilergestänge und einem Regel- oder Steuersystem nach einem der vorhergehenden Ansprüche.

11. Verfahren zum Betreiben einer landwirtschaftlichen Maschine (2), wobei Material, wie Düngemittel, Pflanzenschutzmittel oder Saatgut, aus einem Vorratsbehälter durch ein Abgabeorgan ausgebracht wird, bei dem aktuelle Fahrdaten der Maschine (2) und/oder eines Zugfahrzeugs (1) der Maschine (2) erfasst werden, aus den aktuellen Fahrdaten eine zukünftige Beschleunigung des Verteilergestänges und/oder eine zukünftige auf das Verteilergestänge wirkende Beschleunigungskraft berechnet wird und davon abhängig ein Signal zur Regelung oder Steuerung erzeugt wird, **dadurch gekennzeichnet, dass** aus der aktuellen Drehgeschwindigkeit und/oder Drehbeschleunigung des Zugfahrzeugs bei Kurvenfahrt und dem Lenkwinkel des Zugfahrzeugs und/oder dem Knickwinkel zwischen dem Zugfahrzeug und der Maschine die zukünftige Drehgeschwindigkeit und/oder Drehbeschleunigung der Maschine (2) jeweils bei Kurvenfahrt berechnet wird.

## Claims

1. Closed-loop or open-loop control system for an agricultural machine (2) having a distributor linkage for spreading material, such as fertilizers, plant protection agents or seed, having at least one sensor for determining driving data of the machine (2) and/or driving data of a towing vehicle (1) of the machine (2) and a data processing unit for processing the driving data, the data processing unit using current driving data transmitted by the sensor to calculate a future acceleration of the distributor linkage and/or a future acceleration force acting on the distributor linkage and, on this basis, generating a signal for the closed-loop or open-loop control, **characterized in that** the data processing unit is configured in such a way that, by using the current rate of rotation and/or angular acceleration of the towing vehicle when travelling through a curve and the steering angle of the towing vehicle and/or the bend angle between the towing vehicle and the machine, the future rate of rotation and/or angular acceleration of the machine (2) respectively when travelling through a curve is calculated.

2. System according to Claim 1, **characterized in that** the data-processing unit uses the current rate of rotation and/or angular acceleration of the towing vehicle (1) when travelling through a curve and before the towed machine (2) begins to travel through the curve, to calculate the future rate of rotation and/or angular acceleration of the machine (2) respectively when travelling through a curve.

3. System according to one of the preceding claims, **characterized in that** the data processing unit uses stored information of driving lanes of the machine (2) and the current position and speed of travel of the machine (2) to calculate the future rate of rotation and/or angular acceleration of the machine respectively when travelling through a curve and/or future linear accelerations of the machine (2).

4. System according to one of the preceding claims, **characterized in that** the data processing unit uses stored information of field boundaries and geometry of the machine (2) and/or the towing vehicle (1) and the current position and speed of travel of the machine (2) to calculate the future rate of rotation and/or angular acceleration of the machine (2) respectively when travelling through a curve and/or the future linear acceleration of the machine (2).

5. System according to one of the preceding claims, **characterized in that** the data processing unit uses the target speed of the towing vehicle (1) or the self-propelled machine (2) to calculate a future speed of travel and/or acceleration of the machine (2).

6. System according to one of the preceding claims, **characterized in that** the signal generated on the basis of the future acceleration of the distributor linkage and/or the future acceleration force acting on the distributor linkage effects a warning signal and/or automatic limitation of the speed of travel.

7. System according to one of the preceding claims, **characterized in that** a GPS device measures the distance between the current position of the machine (2) and a stored position, in particular the start of the travel through a curve, and the signal effects a continuous reduction in the speed of travel before the stored position, depending on the distance.

8. System according to one of the preceding claims, **characterized in that** the signal generated on the basis of the future acceleration of the distributor linkage and/or the future acceleration force acting on the distributor linkage triggers a pre-acceleration of the distributor linkage before the actual acceleration of the distributor linkage, in particular before starting to travel through a curve.

9. System according to Claim 8, **characterized in that** the pre-acceleration is set in such a way that the result is a uniform movement, in particular a uniform circular movement, of the distributor linkage during the travel through a curve.

10. Agricultural machine for spreading material, such as fertilizers, plant protection agents or seed, having a storage container which is or can be connected to a discharge member for the material, a distributor linkage and a closed-loop or open-loop control system according to one of the preceding claims.

11. Method for operating an agricultural machine (2), material such as fertilizers, plant protection agents or seed from a storage container being spread by a discharge member, in which current driving data of the machine (2) and/or a towing vehicle (1) of the machine (2) is detected, the current driving data is used to calculate a future acceleration of the distributor linkage and/or a future acceleration force acting on the distributor linkage and, on this basis, a signal for closed-loop or open-loop control is generated, **characterized in that**, by using the current rate of rotation and/or angular acceleration of the towing vehicle when travelling through a curve and the steering angle of the towing vehicle and/or the bend angle between the towing vehicle and the machine, the future rate of rotation and/or angular acceleration of the machine (2) respectively when travelling through a curve is calculated.

## Revendications

1. Système de régulation et de commande pour machine agricole (2) présentant une tringlerie de répartition qui dépose un matériau, par exemple un engrais, un agent phytosanitaire ou des semences, le système présentant au moins un capteur qui détermine des données de déplacement de la machine (2) et/ou des données de déplacement d'un véhicule tracteur (1) de la machine (2) et une unité de traitement de données qui traite les données de déplacement,
l'unité de traitement de données calculant à partir de données de déplacement en cours transmises par le capteur une accélération future de la tringlerie de répartition et/ou une force future d'accélération agissant sur la tringlerie de répartition et formant à partir de là un signal de régulation ou de commande, **caractérisé en ce que**
l'unité de traitement de données est configurée de manière à calculer à partir de la vitesse de rotation en cours et/ou de l'accélération en rotation en cours du véhicule tracteur dans un déplacement en virage et à partir de l'angle de braquage du véhicule tracteur et/ou de l'angle d'inclinaison entre le véhicule tracteur et la machine la vitesse future de rotation et/ou l'accélération future en rotation de la machine (2) lors d'un déplacement en virage.

2. Système selon la revendication 1, **caractérisé en ce que** l'unité de traitement de données calcule à partir de la vitesse de rotation en cours et/ou de l'accélération en rotation du véhicule tracteur (1) dans un déplacement en virage et avant le déplacement en virage de la machine (2) tractée la vitesse de rotation future et/ou l'accélération en rotation future de la machine (2) lors d'un déplacement en virage.

3. Système selon l'une des revendications précédentes, **caractérisé en ce que** l'unité de traitement de données calcule à partir d'informations conservées en mémoire concernant les trajets parcourus par la machine (2) et de la position en cours et de la vitesse de déplacement en cours de la machine (2) la vitesse de rotation future et/ou l'accélération en rotation future de la machine pour un déplacement en virage et/ou des accélérations linéaires futures de la machine (2).

4. Système selon l'une des revendications précédentes, **caractérisé en ce que** l'unité de traitement de données calcule à partir d'informations conservées en mémoire concernant les limites du champ et la géométrie de la machine (2) et/ou du véhicule tracteur (1) et de la position en cours et de la vitesse de déplacement en cours de la machine (2) la vitesse de rotation future et/ou l'accélération en rotation future de la machine pour un déplacement en virage et/ou l'accélération linéaire future de la machine (2).

5. Système selon l'une des revendications précédentes, **caractérisé en ce que** l'unité de traitement de données calcule à partir de la vitesse de consigne du véhicule tracteur (1) ou de la machine (2) autotractée une vitesse future de déplacement et/ou une accélération future du déplacement de la machine (2).

6. Système selon l'une des revendications précédentes, **caractérisé en ce que** le signal formé en fonction de l'accélération future de la tringlerie de répartition et/ou de la force d'accélération future qui agit sur la tringlerie de répartition un signal d'avertissement et/ou une limitation automatique de la vitesse de déplacement.

7. Système selon l'une des revendications précédentes, **caractérisé en ce qu'**un dispositif GPS saisit la distance entre la position en cours de la machine (2) et une position conservée en mémoire, en particulier au début d'un déplacement en virage, et le signal a pour effet une diminution continue de la vitesse de déplacement en fonction de la distance avant la position conservée en mémoire.

8. Système selon l'une des revendications précédentes, **caractérisé en ce que** le signal formé en fonction de l'accélération future de la tringlerie de répartition et/ou de la force d'accélération future qui agit sur la tringlerie de répartition déclenche une pré-accélération de la tringlerie de répartition avant l'accélération effective de la tringlerie de répartition et en particulier avant le début d'un déplacement en virage.

9. Système selon la revendication 8, **caractérisé en ce que** la pré-accélération est ajustée de manière à obtenir un déplacement uniforme et en particulier un déplacement en cercle régulier de la tringlerie de répartition pendant le déplacement en virage.

10. Machine agricole destinée à appliquer un matériau, par exemple un engrais, un agent phytosanitaire ou des semences, et présentant un récipient de réserve relié à un organe d'application du matériau ou apte à y être relié, une tringlerie de répartition et un système de régulation ou de commande selon l'une des revendications précédentes.

11. Procédé de conduite d'une machine agricole (2), dans lequel un matériau, par exemple un engrais, un agent phytosanitaire ou des semences, est extrait d'un récipient de réserve par un organe d'application, et dans lequel des données de déplacement en cours de la machine (2) et/ou d'un véhicule tracteur (1) de la machine (2) sont saisies, une accélération future de la tringlerie de répartition et/ou une force d'accélération future agissant sur la tringlerie de répartition est calculée à partir des données de déplacement en cours et en fonction de cela, un signal de régulation de commande est formé,
**caractérisé en ce que**
à partir de la vitesse de rotation en cours et/ou de l'accélération en rotation en cours du véhicule tracteur dans un déplacement en virage et à partir de l'angle de braquage du véhicule tracteur et/ou de l'angle d'inclinaison entre le véhicule tracteur et la machine, la vitesse future de rotation et/ou l'accélération future en rotation de la machine (2) lors d'un déplacement en virage sont calculées.
